# EUROPEAN PATENT APPLICATION

(11) **EP 1 447 778 A1**
(43) Date of publication of application: **18.08.2004**
(21) Application number: 04001989.5
(22) Date of filing: 29.01.2004
(51) Int. Cl.: G07G 5/00, G07B 15/00

(54) **Receipt-issuing device**

(30) Priority: 13.02.2003 JP 2003034881
(71) Applicant: MATSUSHITA ELECTRIC INDUSTRIAL CO., LTD., Kadoma-shi, Osaka 571-8501 (JP)
(72) Inventor: Sakamoto, Dai, Yokohama-shi Kanagawa 223-0061 (JP)
(74) Representative: Grünecker, Kinkeldey, Stockmair & Schwanhäusser Anwaltssozietät

(57) **Abstract**

An electronic toll collection (ETC) system has a problem that the system cannot issue a receipt at the time of use, because the system permits an ETC vehicle to pass a tollgate nonstop. The invention intends to solve the problem and provides a receipt-issuing device while ensuring security. In order to achieve it, the receipt-issuing device includes an IC card interface unit through which information is read out or written to an IC card, an SAM unit that enciphers information to be recorded in the IC card, and deciphers information to be read out therefrom, an operation unit that inputs an instruction of issuing a receipt, a printer unit that prints the receipt, and a control-processing unit that, when the SAM unit verified the security, permits an issue of the receipt by the printer unit. A requirement in the ETC history of use that the receipt is once issued is erased from the IC card, or the requirement is locked on data so that the receipt cannot be issued again to the same requirement.

## Description

### BACKGROUND OF THE INVENTION

### Field of the Invention

The present invention relates to a receipt-issuing device for an electronic toll collection system that carries out radio communications between a roadside radio device provided at a tollgate, through line and the like of a toll road and an on-vehicle radio device mounted on a vehicle, and automatically receives a fare of the toll road.

### Description of the Prior Art

In general, when a price for merchandise or a service is paid, a receipt is issued from a cash register. There is an automatic medical expense adjustment system that makes up a consultation ticket used in a clinic with an IC card, and issues a receipt when the charge is inputted (for example, Japanese Published Unexamined Patent Application No. Sho 61-231660). In receiving the fare of the toll road, when a staff is available, the receipt is issued on the payment of the fare. However, the receipt is not issued in the electronic toll collection system (hereunder, abbreviated as ETC) that does not require a direct transfer of cash.

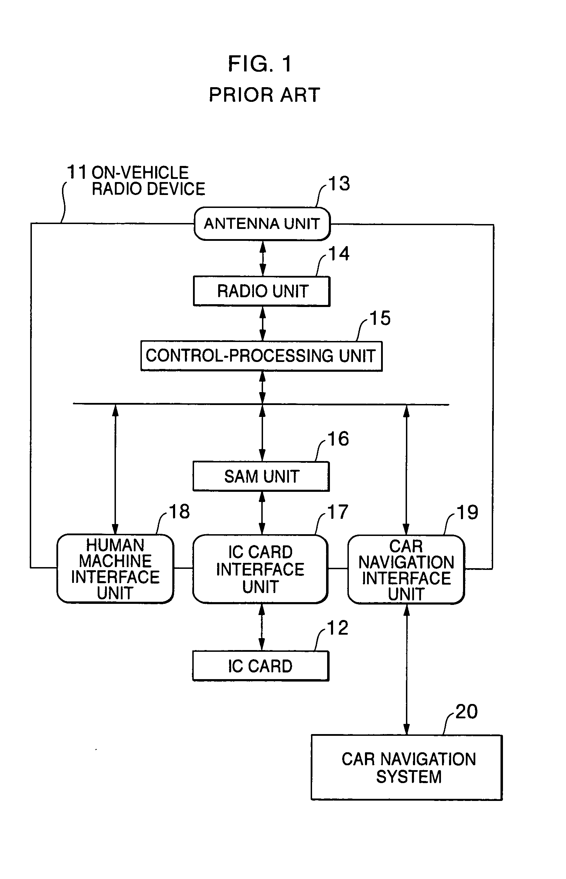

When an ETC on-vehicle radio device comes into a communication area that the roadside radio device provided at a tollgate covers with its antenna, and receives a radio wave from the roadside radio device, the ETC system automatically starts communication and accounting, and displays the accounting information by an indicator or gives the information by an audio guidance through a speaker. Fig. 1 illustrates a configuration of the on-vehicle radio device in the ETC system. In Fig. 1, an on-vehicle radio device 11 uses an IC card 12 to or from which private information and accounting information and so forth are written and read. The communications with the roadside radio device are carried out through an antenna unit 13 and a radio unit 14 configured with an analog circuit that performs the transmission and reception by the high frequency signal of 5.8 GHz band. A control-processing unit 15 includes a DSRC (Dedicated Short Range Communication) processor and a CPU, and executes the whole information processing including the control of the radio communications and the control of the IC card. An SAM (Secure Application Module) unit 16 enciphers a signal to be transmitted and deciphers a received signal, and enciphers and deciphers the information to be recorded in the IC card 12. An IC card interface unit 17 is made up with an IC card connector, and necessary information is read from and written to the IC card 12 through this connector. A human machine interface unit 18 is made up of an LED or a speaker that presents the state of the on-vehicle radio device 11. A car navigation interface unit 19 is used in connection with a car navigation system 20, which is outside equipment.

Now, the operation of the on-vehicle radio device 11 will be described. First, the user inserts the IC card 12 having the private user ID recorded into the on-vehicle radio device 11, which is installed in the vehicle. As the IC card 12 is inserted, the on-vehicle radio device 11 activates the IC card 12 through the communications between the SAM unit 16 and the IC card 12. Concretely, the on-vehicle radio device 11 powers the IC card 12, selects the ETC application program recorded in the IC card 12, and fetches a cipher key from the IC card 12, which is necessary for the SAM unit 16 to record information into the IC card 12. At the same time, the SAM unit 16 transfers a cipher key to the control-processing unit 15, which is used for radio communications with the roadside radio device. When these operations are normally completed and the on-vehicle radio device 11 is determined usable, the confirmation LED is lighted to inform the user of the situation together with the audio guidance from the speaker. The confirmation LED and the speaker are included in the human machine interface unit 18 in Fig. 1. In replacement for the human machine interface unit 18, the car navigation system 20 can transmits the result to the user by means of the voice or the display through the car navigation interface unit 19.

While the vehicle travels outside the feasible area for communication of the roadside radio device, the on-vehicle radio device 11 is in the standby state. When receiving the radio signal from the roadside radio device through the antenna unit 13, the on-vehicle radio device 11 detects the input field strength by the radio unit 14. When the field strength exceeds a predetermined level, the control-processing unit 15 recognizes that the vehicle is in the feasible area for communication, and the on-vehicle radio device 11 shifts to the communication state, and shifts to the accounting processing by the half-duplex communication. The radio unit 14 converts the high frequency signal of 5.8 GHz band into the base band signal of 1 Mbps being the communication data. The control-processing unit 15 executes the protocol processing of the communication data. The SAM unit 16 deciphers the reception data and enciphers the transmission data. Through this communication procedure, the on-vehicle radio device 11 transmits to the roadside radio device the vehicle information recorded in the on-vehicle radio device 11 and the private information of the cardholder read from the IC card 12 through the SAM unit 16. The final accounting result is reported to the driver by means of the voice or the indication through the human machine interface unit 18; at the same time, it is written into the IC card 12 through the IC card interface unit 17. At this moment, the SAM unit 16 enciphers the write data. When the vehicle passes through the communication area and comes outside the area, the radio unit 14 detects the lowering of the field strength inputted from the antenna unit 13. This result is transmitted to the control-processing unit 15, and the on-vehicle radio device 11 again enters into the standby state.

When the user desires to confirm the history of use of the ETC, the control-processing unit 15 executes the IC card readout command to the SAM unit 16 through the operation by the human machine interface unit 18 or the car navigation system 20. Thereby, the history of use recorded in the IC card 12 is read out. It is also presented on the display of the car navigation system 20 by way of the IC card interface unit 17, the SAM unit 16, and the car navigation interface unit 19. Thereby, the user is able to read the date of use, the tollgate, the fare, etc.

In this manner, the ETC system greatly enhances the convenience of use of the toll road; however, for the very reason that the ETC system permits the vehicle to pass the tollgate nonstop, the ETC system cannot issue the receipt for each use. Considered from the nature of the receipt, there must not be the case where several receipts are issued to the same passage. In addition, the contents of the receipt must not be manipulated. The ETC system embraces such restrictions and a problem of the security.

The present invention intends to solve these problems of the conventional system, and provides a receipt-issuing device that permits to easily issue a receipt in the ETC system while ensuring the security.

### SUMMARY OF THE INVENTION

According to one aspect of the invention, the receipt-issuing device includes interface means through which information is read out or written to an IC card, security means that encipher information to be recorded in the IC card, and decipher information to be read out therefrom, input means that input an instruction of issuing a receipt, printing means that print the receipt, and control means that permit an issue of the receipt by the printing means. Owing to this configuration, the receipt-issuing device is able to easily issue a receipt while ensuring the security.

Further, in the receipt-issuing device, when a receipt is issued to a requirement in a fare adjustment history of the IC card, the control means erase from the IC card the requirement to which the receipt is issued. Owing to this configuration, the receipt-issuing device is able to inhibit a repeated issue of a receipt to an identical requirement.

Further, in the receipt-issuing device, when a receipt is issued to a requirement in a fare adjustment history of the IC card, the control means inhibit reading out from the IC card the requirement to which the receipt is issued. Owing to this configuration, the receipt-issuing device is able to inhibit a repeated issue of a receipt to the same requirement.

Further, in the receipt-issuing device, the IC card is an IC card used for an electronic toll collection system. Owing to this configuration, the receipt-issuing device is able to easily issue a receipt in the nonstop electronic toll collection system or in the narrow-band communication application services.

In this manner, since the receipt-issuing device of the invention includes the interface means through which information is read out or written to the IC card, the security means that encipher information to be recorded in the IC card, and decipher information to be read out therefrom, the input means that input an instruction of issuing a receipt, the printing means that print the receipt, and the control means that permit an issue of the receipt by the printing means, the receipt-issuing device is able to easily issue a receipt while ensuring the security.

The foregoing features and advantages of the invention will become more apparent through the following embodiment described with reference to the drawings.

### BRIEF DESCRIPTION OF THE DRAWINGS

Fig. 1 is a block diagram illustrating the configuration of a conventional ETC on-vehicle radio device;
Fig. 2 is a block diagram illustrating the configuration of a receipt-issuing device relating to the embodiment of the invention; and
Fig. 3 is a flowchart illustrating the receipt issuing processing relating to the embodiment of the invention.

### DESCRIPTION OF THE PREFERRED EMBODIMENTS

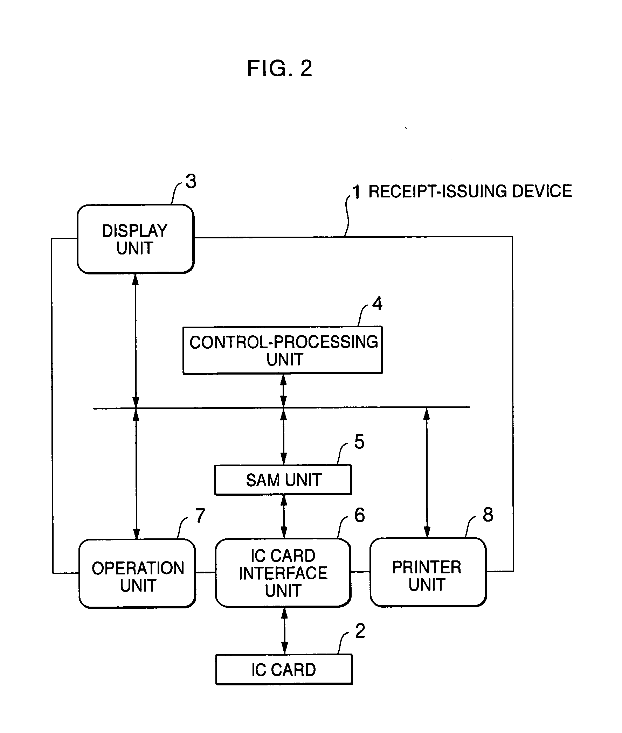

The embodiment of the invention will be described with reference to the accompanying drawings. Fig. 2 illustrates the configuration of a receipt-issuing device relating to the embodiment. In Fig. 2, a receipt-issuing device 1 is installed at places where people gather, such as convenience stores, stations, etc. An IC card 2 is used as a medium for collecting the toll, and the private information, accounting information, etc., are read from and written to the IC card 2. A display unit 3 displays the history of use recorded in the IC card 2 and so forth, which is made up with a liquid crystal display or CRT. A control-processing unit 4 is made up of a microcomputer that executes the whole information processing including the ETC processing and the control of the IC card 2. An SAM (Secure Application Module) unit 5 is a signal-processing unit that enciphers the information to be recorded into the IC card 2, and deciphers the information to be read out from the IC card 2. An IC card interface unit 6 is configured with an IC card connector, and necessary information is read from and written to the IC card 2 through this connector. An operation unit 7 is an input means of a touch panel or a keyboard or the like, which executes starting to read out the history of use, selecting the history, instructing to issue a receipt, and inputting the destination. A printer unit 8 is a printing means that prints a receipt on a predetermined paper.

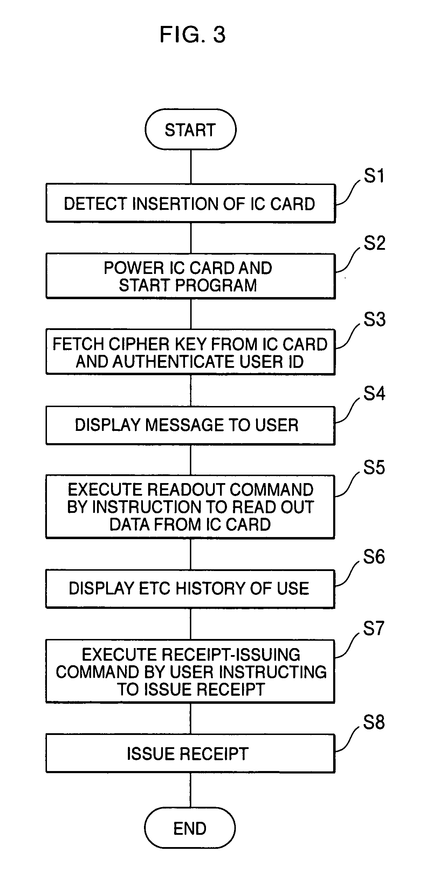

Next, the operation of the receipt-issuing device 1 in this embodiment will be described with reference to Fig. 3. First, the user inserts the IC card 2 in which a desired ETC history of use is recorded into the receipt-issuing device 1 being installed at convenience stores and stations. As the IC card interface unit 6 detects the insertion of the IC card 2 (step S1), the receipt-issuing device 1 activates the IC card 2 through the communications between the SAM unit 5 and the IC card 2. Concretely, the receipt-issuing device 1 powers the IC card 2, and activates to select the ETC application program recorded in the IC card 2 (step S2). The SAM unit 5 fetches a cipher key from the IC card 2, which is necessary for the SAM unit 5 to record information into the IC card 2, and deciphers the key to authenticate the user ID (step S3). When these operations are normally completed, and the security by the SAM unit 5 is verified, the control-processing unit 4 permits the issue of the receipt by the printer unit 8 and the display of a message on the display unit 3, and prompts the user to a next operation (step S4). When the user instructs to read out the IC card 2 through the operation unit 7, the control-processing unit 4 executes the IC card readout command to the SAM unit 5 (step S5), and the display unit 3 displays the ETC history of use recorded in the IC card 12 (step S6). While displaying on the display unit 3 and operating on the operating unit 7, the user selects a requirement for issuing the receipt among the history of use, inputs the destination of the receipt, and instructs the issue. Thereby, the processing executes the receipt issuing command (step S7); and the printer unit 8 prints the desired receipt with the date of use, the tollgate, and the charge, etc., to issue the receipt (step S8). Here, the requirement in the ETC history of use that the receipt is once issued is erased from the IC card 2, or the requirement is locked on the data so that the receipt cannot be issued again to the same requirement.

Thus, according to this embodiment, the receipt-issuing device 1 includes the IC card interface unit 6 through which information is read out or written to the IC card 2, the SAM unit 5 that enciphers information to be recorded in the IC card 2, and deciphers information to be read out therefrom, the operation unit 7 that inputs the instruction of issuing a receipt, the printer unit 8 that prints the receipt, and the control-processing unit 4 that, when the SAM unit 5 verified the security, permits the issue of the receipt by the printer unit 8. Therefore, the receipt-issuing device 1 is able to easily issue the receipt while ensuring the security. Also in the narrow-band communication application services such as the shops and gas stations in the service areas or parking areas using the same 5.8 GHz band as the ETC system, the receipt-issuing device 1 can be used to issue the receipt.

As mentioned above, the receipt-issuing device of the invention is able to easily issue a receipt while ensuring the security.

The invention being described based on the preferred embodiment illustrated in the drawings, it should be clear to a person having ordinary skill in the art that various modifications and changes are possible without a departure from the spirit and scope of the invention. The invention is to include such modifications and changes.

## Claims

1. A receipt-issuing device comprising:
interface means through which information is read out or written to an IC card;
security means that encipher information to be recorded in said IC card, and decipher information to be read out therefrom;
input means that input an instruction of issuing a receipt;
printing means that print the receipt; and
control means that permit an issue of the receipt by the printing means.

2. The receipt-issuing device according to Claim 1, wherein, when a receipt is issued to a requirement in a fare adjustment history of said IC card, said control means erase from the IC card the requirement to which said receipt is issued.

3. The receipt-issuing device according to Claim 1, wherein, when a receipt is issued to a requirement in a fare adjustment history of said IC card, said control means inhibit reading out from said IC card the requirement to which said receipt is issued.

4. The receipt-issuing device according to Claim 1, wherein said IC card is an IC card used for an electronic toll collection system.

5. The receipt-issuing device according to Claim 2, wherein said IC card is the IC card used for the electronic toll collection system.

6. The receipt-issuing device according to Claim 3, wherein said IC card is the IC card used for the electronic toll collection system.
